# EUROPEAN PATENT SPECIFICATION

(11) **EP 2 120 201 B1**
(45) Date of publication and mention of the grant of the patent: **26.10.2011**
(21) Application number: 08156408.0
(22) Date of filing: 16.05.2008
(51) Int. Cl.: G06Q 30/00, G06F 9/44

(54) **Method and system to avoid fake metrics in advertising**
Verfahren und System zum Vermeiden gefälschter Maße in Werbungen
Procédé et système pour éviter les erreurs de mesures dans les annonces publicitaires

(30) Priority: 15.05.2008 US 121729
(43) Date of publication of application: 18.11.2009
(73) Proprietor: RESEARCH IN MOTION LIMITED, Waterloo, Ontario N2L 3W8 (CA)
(72) Inventor: Rybak, Michal Andrzej, St James (BB); Martin-Cocher, Gaelle, Toronto Ontario M6S 2Y2 (CA)
(74) Representative: Moore, Barry

(56) References cited:
- EP-A1- 1 288 891
- WO-A-01/41022
- WO-A-01/82195
- WO-A-99/13423
- US-A1- 2003 065 770
- US-A1- 2006 212 347
- US-A1- 2007 244 820

## Description

The present disclosure relates generally to advertising and in particular to consumption metrics regarding advertising.

On computer systems and mobile devices, advertisers generally pay for an advertisement by the number of times that it is consumed. Consumption as used herein means viewing, clicking on, utilizing or some other form of interaction with the ad that can be measured. Based on this, it is important to advertisers that the consumption of the ad be real, and not faked.

Faking could occur, for example, by having an application request advertisements for consumption by a user and returning metrics of consumption by the user without actually using the ads or displaying them to the user. This is merely one example.

Various computationally expensive techniques are provided on wired networks or on devices with significant computational power. These include treating the metric as accurate and then reviewing the source of the consumption. Thus, on a click through advertisement the statistics could be compiled as to who is clicking through and if a significant proportion of the click through comes from a single IP address, this could indicate fake metrics. Other examples would be known to those in the art.

Further, faking metrics is easier when embedding advertising into an application. Methods for detecting these fake metrics are not fool proof in many circumstances.

WO 01/41022 discloses a system and method for enabling user control over the creation and deployment of banner ad campaigns. Through a web-browser interface, an advertiser can control the creation and implementation of an online campaign (e.g., banner ad campaign). In particular, an advertiser can control various advertising campaign functions, including the design of a banner ad, the selection of an advertising channel in which the created banner ad will be displayed, the monitoring of the effectiveness of the banner advertising campaign, and the redesign and redeployment of the banner ad.

US 2003/0065770 discloses a method for monitoring client interaction with a resource downloaded from a server in a computer network includes the steps of using a client to specify an address of a resource located on a first server, downloading a file corresponding to the resource from the first server in response to specification of the address, using the client to specify an address of a first executable program located on a second server, downloading the first executable program from the second server to run on the client so as to determine the amount of time the client interacts with the file downloaded from the first server, using a server to acquire client identifying indicia from the client, and uploading the amount of time determined by the first executable program to a third server.

WO 99/13423 discloses a method in which an applet is downloaded to the user's Web browser to track the user's interactions with the Web page. Tracked user interactions include mouse cursor position, time displayed on page, time of mouse cursor hovering over the advertisement, and so on. At an appropriate time, such as when the display of the Web page is terminated, the applet forwards logged interaction information from the client to a remote server, the remote server being typically controlled by an advertiser, rating service or the like. As a result, the advertiser may track consumer response to advertising impressions on a Web page without requiring the user to download other pages.
US 2007/0244820 discloses a method for verifying actual use or display of advertising content. A security module of an electronic device reads the display memory and verifies that its content corresponds to a valid advertisement.

### GENERAL

The present disclosure may provide a method to avoid fake advertisement metrics from an untrusted application using a trusted advertising client on a device, comprising: receiving at the trusted advertising client an indication from the untrusted application that an advertisement is requested; assuming control by the trusted advertising client of at least a portion of a user interface of the device from the untrusted application; at the trusted advertising client, providing the advertisement in the portion of the user interface; receiving and compiling metrics at the trusted advertising client; and reporting the compiled metrics.

The present disclosure may further provide a device adapted to avoid fake advertisement metrics comprising: a processor; a communications subsystem; a user interface; at least one untrusted application running on said processor, said at least one untrusted application adapted to interact with said user interface; and a trusted advertising client, said trusted advertising client adapted to receive a request from the untrusted application for an advertisement, assume control over at least a portion of the user interface, provide the advertisement over the user interface, and compile advertisement metrics.

### BRIEF DESCRIPTION OF THE DRAWINGS

The present disclosure will be better understood with reference to the drawings in which:
**Figure 1** is a block diagram showing an exemplary advertising system;
**Figure 2** is a flow chart showing a process for displaying advertisements and receiving use metrics;
**Figure 3** is a data flow diagram showing communications between a user interface, application and advertising client; and
**Figure 4** is a block diagram of an exemplary mobile device apt to be used with the present disclosure.

### DESCRIPTION OF PREFERRED EMBODIMENTS

The present disclosure can be utilized in both wired and wireless environments. The use of wireless environments is used below for illustration purposes. However, this is not meant to be limiting and the present system and method could equally be utilized in a wired environment.

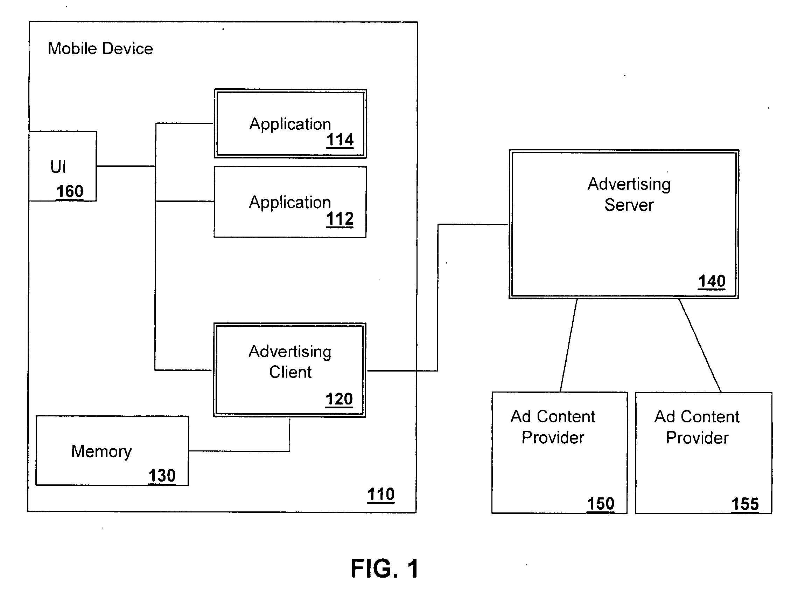

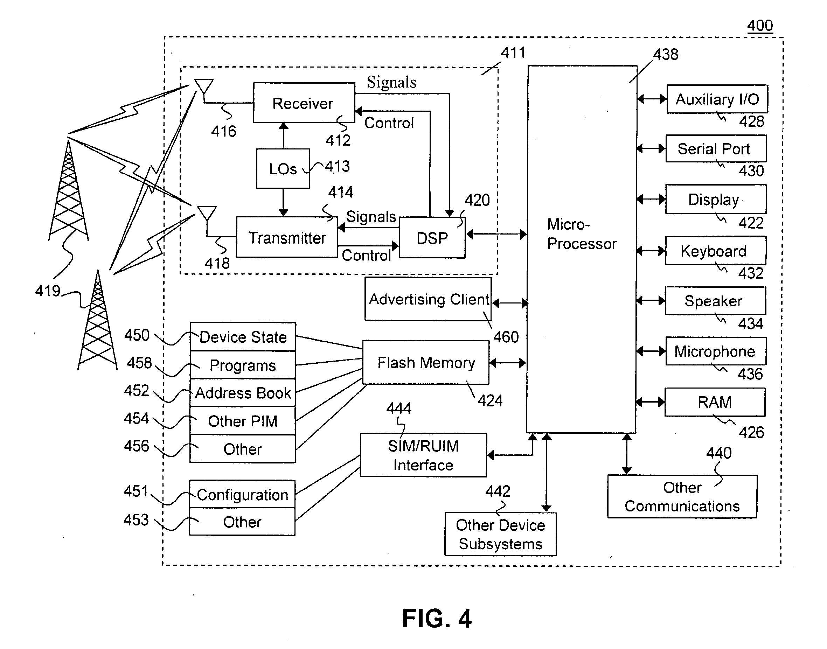

Reference is now made to **Figure 1. Figure 1** shows a block diagram illustrating logical components within a system for facilitating mobile advertisement. A mobile device **110** is adapted to consume or create content through an application **112** and to perform other related functions, as would be known to those skilled in the art. When used herein, a mobile device is a general term that could include cellular telephones, mobile devices, pagers, laptop computers or other devices known to those skilled in the art. An exemplary mobile device is described below with reference **Figure 4****.**

In the embodiment of **Figure 1****,** mobile device **110** includes applications **112** and **114,** and an advertising client **120.**

The use of applications **112** and **114** are merely meant for simplification and in practice multiple applications would be on a mobile device **110.**

Applications **112** and **114** represent applications that utilize advertisements. Examples could include an advertisement enabled email application in which advertisements are inserted into email messages, a web browser showing web pages into which advertisements can be inserted, instant messaging applications into which advertisements can be inserted, video or multimedia players which can have advertisements therein, or games, among others. This is not meant to limit applications **112** and **114,** and any application could be utilized as long as it includes the ability to have advertisement.

In the embodiment of **Figure 1****,** an advertising client **120** communicates with applications **112** and **114,** for example utilizing an application program interface (API), and can further communicate with an advertising server **140,** for example through a communications subsystem on mobile device **110.**

Advertising client **120** can further communicate with memory on a mobile device **110.** Such memory is shown as memory **130** in **Figure 1****.** The communication can, for example, proceed through a processor and a bus.

Advertising server **140** is responsible for selecting or providing advertisements from registered advertising content providers to appropriate devices. In one embodiment, the advertising server **140** is also responsible for delivering advertisements to mobile device **110.** As will be appreciated this can be done through a pull system in which an advertising client **120** requests ads from advertising server **140.** Alternatively, this could be done on a push system in which advertising server **140** decides that mobile device **110** should have certain ads and pushes these ads to advertising client **120.**

Further, advertisements can be pulled on the fly. In other words, the advertisements can be obtained from advertising server **140** as they are required by application **112** or **114.** In alternative configurations the advertising server **140** could provide ads to mobile device **110** which are stored within memory **130** of the mobile device. This could facilitate the transfer of ads when network conditions are preferable for data transfer. Such network conditions could include a low cost period such as in the middle of the night or when the mobile device **110** is connected to a network through means such as a USB connection through a computer or through a wireless local area network (WLAN) such as WiFi.

A registered ad content provider, as illustrated by ad content providers **150** and **155** in **Figure 1****,** is an ad content provider with an established business relationship with advertising server **140.**

In one embodiment, when new ad content providers such as ad content provider **150** registers with advertising server **140** it can provide information about types of advertisements that it is providing. This could enable advertising server **140** to target advertisements based on the user of mobile device **140.** For example, mobile device **110** could include a profile that it provides to advertising server **140** regarding the preferences of a user of mobile device **110.** As such, mobile advertising server **140** could, in this embodiment, match the user preferences.

In one embodiment, mobile device **110** includes a profile stored in memory **130.** A profile could be created based on user questionnaires when the user first signs up to use the mobile device or could be based on some sort of watching application which tracks the user's content consumption and creation to build a profile.

Under a traditional model of mobile advertising, mobile advertising server **140** would provide an ad to advertising client **120.** Application **112** could be loaded onto mobile device **110** and could be provided by various third party creators of applications. In this case, the application **112** could request the ad from an advertising server **140** directly, or perhaps from an advertising client **120,** and provides statistics on the consumption of the ad back to advertising server **140** or advertising client **120.** The problem with this is that application **112** could be created by any third party and thus may not be honest about the ad consumption metrics that it provides back to advertising client **120** or advertising server **140.**

One solution to this would be to make each application **112** trusted. In other words, a certifying body would have to indicate that application **112** provides real metrics regarding the consumption of advertisements. Such a certifying body could, for example, be the manufacturer of the mobile device. However, this places a high burden on application developers and/or manufactures of mobile devices and further provides delays for introducing applications onto the mobile device, may dissuade developers from creating applications, and possibly limits applications that could be loaded onto the mobile device.

The present disclosure therefore provides for a trusted advertising client **120** that is adapted to communicate with untrusted applications **112.**

As used herein, trusted means trusted by an advertising delivery system operator and indirectly the by ad providers and the advertisers, forming a chain of trust.

In one embodiment of the present disclosure, the trusted advertising client has the capability of assuming control of the user interface (UI) **160** on mobile device **110** in order to take the advertising functionality out of application **112** and place it within a component of trusted advertising client **120.** As will be appreciated, this further allows the content consuming or creating application **112** to focus on its core functionality without requiring the processing of advertisements by merely providing application **112** with the ability to request advertisements. Taking over control of the UI can be done, for example, though a processor on the mobile device, where the processor provides control over the UI to advertising client **120.**

In one embodiment, some applications such as application **114** may be trusted themselves, allowing the advertisement handling to be performed by the application.

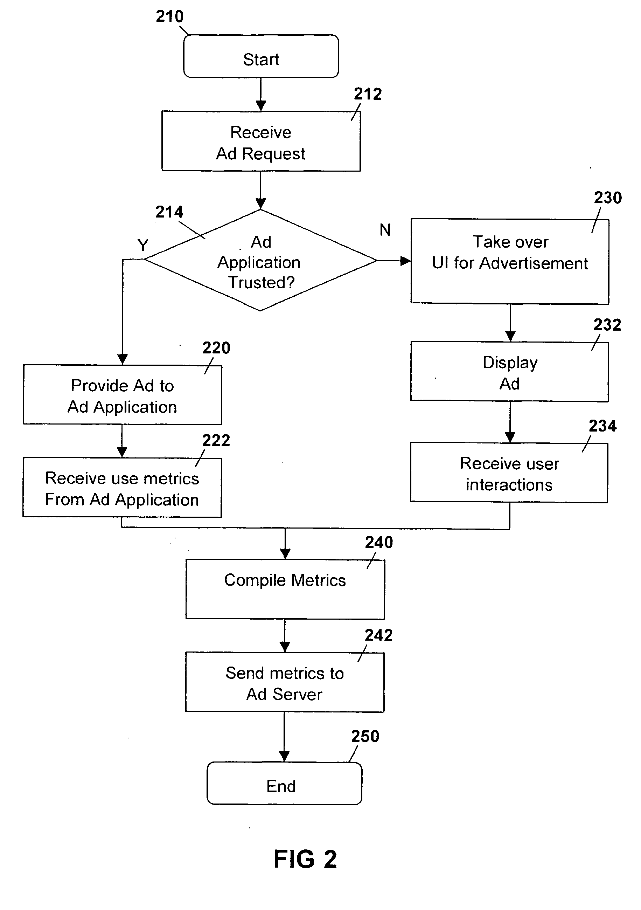

Reference is now made to **Figure 2. Figure 2** shows a flow diagram of a process on an advertising client such as advertising client **120** from **Figure 1****.** The process starts at block **210** and proceeds to block **212** in which the advertising client receives a request for an advertisement from an application. The application could be application **112** from **Figure 1****.**

The process next proceeds to block **214** in which an optional check is made to see whether the ad application is trusted. If yes, then the process proceeds to block **220** and the advertisement is provided to the advertisement application or in some embodiments the trusted application can access the ad itself. The process then proceeds to block **222** in which use metrics are received back from the application.

From block **214** if the ad application requesting the ad is not trusted the process proceeds to block **230** in which the user interface required for the advertisement is taken over by the advertising client. Thus, for a visual display the display portion that will be utilized to show the ad is taken over by the advertising client. For an auditory user interface the speakers can be taken over to play an auditory ad. In other cases user interface may include other sensory aspects that can be taken over by the advertising client.

The process then proceeds to block **232** in which the advertisement is "displayed". As indicated above, the displaying of an ad could be on a visual interface or alternatively could be played on the auditory portion of the user interface or provided on some sort of other user interface to a user.

The process then proceeds to block **234** in which user interactions are received regarding the advertisement.

As will be appreciated by those skilled in the art, the user interactions received in block **234** could be as simple as an indication that the ad was displayed, played on audio, among others. User interactions could also be more sophisticated interactions such as the user clicking through an advertisement or interacting with the advertisement in other ways.

Interaction models could be selected from the following non exhaustive list:
a. Click to contact (e.g.: make calls, send MMS, SMS, Email etc.);
b. Click to ask to be contacted (e.g.: receive calls, MMS, SMS, Email etc.);
c. Click to locate: the User obtains more information about the advertiser based on the location (e.g.: advertiser's shops near its location);
d. Click to enter branded Mobile Web site: the User is redirected to the Advertiser's web-site (e.g.: to fill out some forms, to get more information, etc);
e. Click to receive coupon: the User receives a discount coupon that might be stored in their device;
f. Click-to-buy: the User buys the Advertiser products;
g. Click to download content: the User receives Advertiser's related content (e.g.: ringtone, brochure, video, etc);
h. Click to forward content advertisements: the User forwards the ad directly or through Service Provider to another User;
i. Forwarding Ad;
j. Sending notification;
k. Click to request: the User requests some action from the Advertiser with some parameters associated if needed (e.g.: opt in for winning prizes, order brochure by supplying postal or email addresses, etc);
l. Click-to-discard: the User communicates to the Service Provider that the advertisement is not of his/her interest (e.g.: he/she refuses a discount coupon); or
m. Click to save or bookmark an ad.

Thus the above illustrates various metrics that can be measured and reported.

From blocks **222** or **234** the process proceeds to block **240** in which the advertising client compiles the metrics that it has received or recorded.

The process then proceeds to block **242** in which the metrics are sent to the advertising server and the process proceeds to block **250** and ends. As will be appreciated, the sending of metrics in block **242** could be done immediately, after a predetermined number of metrics have been received, periodically, among others. The present disclosure is not meant to be limited to any particular configuration for sending metrics to an advertising server.

In one embodiment a trusted application **114** could further require the advertising client **120** to assume control of the advertisements, thus proceeding through blocks **230, 232** and **234** for the trusted application.

Control over the user interface, with regard to an application, is determined by information that is exchanged over the application program interface in the advertising client and the advertising application. This could be as simple as, for example, indicating that a certain portion of a display should have an advertisement or a certain audio clip should be preceded by an advertisement audio clip, or could be more complicated, such as having a more interactive environment in which an advertisement could be placed on, for example, a three dimensional object within a game or the ad could be moving within the game.

### Email application

The above will be illustrated with reference to various applications. In one case, application **112** is an email application. The application is enabled to receive advertisements and display the advertisements along with emails. In this case, the advertising client **120** performs the actual display of the advertisements.

For example, when an email is opened the application could send a message to the advertising client **120** that an advertisement is required at position x, y on the display. Various constraints could also introduced including that the ad should be no bigger then a certain size or have certain dimensions. Other information could include context information about the content of the email in order to provide more targeted advertisement. Other examples would be apparent to those skilled in the art.

In this case, the application **112** continues to perform as it normally would on the screen by displaying the content of the email to the user. However, the other portion of the user interface is taken over by advertising client **120** and an ad is displayed on that portion of the display. The ad could be retrieved from a memory **130** or could be received from an advertising server **140.**

Any interaction with the ad would be recorded by the advertising client **120.** For example, if the email is talking about going out for lunch, a targeted advertisement could be placed in the email to provide a local restaurant. If the user clicks on the ad for the local restaurant this could be recorded by the advertising client **120** and statistics regarding this could be provided to the ad content provider **150** or **155.**

### Video player

In another embodiment, the application could be a media player that displays videos and provides audio to a user. In this case, the ad enabled media player could indicate to the advertising client **120** that an advertisement can be inserted at the beginning of a video clip or at a certain time within the video clip. Again, for targeted advertisement, the general content of the video clip could be provided to the advertising client **120.** Further, limitations such as the maximum length of a clip that is permissible could be provided to the advertising client **120.** Other information or restrictions would be apparent to those skilled in the art having regard to the present disclosure.

Upon receipt of the request by the media player application, the advertising client **120** retrieves an appropriate ad and takes over the audio and video portions of the device to display the ad, after which control is returned to the media player. In other embodiments the ad could merely be text that is inserted onto the video and thus only the portion of the screen that text is displayed on is taken over by the advertising client **120.** Again, other examples would be known to those in the art.

### Video game

In a further example, an advertisement could be inserted into a video game. For example, an advertisement could be displayed on a virtual billboard that a car may pass in a driving game. In this case, the API between the ad application and the advertising client could provide for more complex displaying of advertisements such as skewing the advertisement to provide for a three dimensional environment, providing motion of the ad within the game itself among others.

In alternative embodiments, the ad could be wrapped around three dimensional objects within the game such as around a lamppost, or placed on a textured surface, and thus the API would need to include information about the object around which the ad is being placed and other such information.

In other embodiments, a user may interact with an actual advertising object within the game. Thus, a character in the game may be able to walk up to a table and pick up a bottle of a branded soft drink. In this case, the API would need to include information about displaying the branded soft drink on the table but it would also need to include the ability for the advertising client **120** to know when such an interaction occurs.

The above are merely examples, and the information flow that passes between an application and an advertising client **120** could be tailored based on the particular requirements for displaying the ad and for generating metrics regarding the consumption of the ad. Thus mouse or scroll wheel clicks could go to the application unless the clicks get close to an advertisement, at which point the trusted advertising client **120** could receive the click and process it to determine whether the click is relevant for the ad. Such interaction might require the interaction of the advertising client **120** to be able to return information to the application **112** and allow the application **112** to run smoothly. Other options would be known to those in the art.

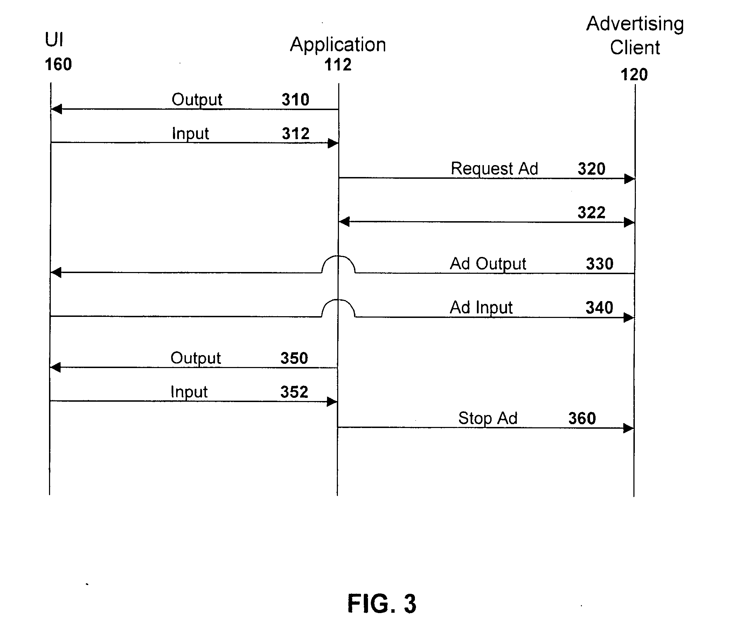

Reference is now made to **Figure 3. Figure 3** shows a data flow diagram between a user interface **160,** and advertising application **112** and an advertising client **120.** As will be appreciated by those in the art, **Figure 3** is a generalization of the above embodiments. The flow diagram shows that ad application **112** communicates with UI **160** by providing outputs **310** and receiving inputs **312.** Outputs **310** could be directed to any output for a user interface including, but not limited to, a display, a speaker, a vibration motor, or other similar outputs. Input **312** could be any input to a user interface including, but not limited to: a keystroke, a mouse click, a mouse movement, a scroll wheel movement, a scroll wheel click, a touch screen interaction, a stylus movement, a microphone input, among others.

Outputs **310** and inputs **312** could continue as ad application **112** has control over UI **160.**

Ad application **112** at some point decides that an advertisement is needed and therefore sends a request ad message **320** to advertising client **120.** Message **320** could, as described above, include various parameters including the type of ad, the size of the ad, the location of the ad, the point that the ad should be inserted, the duration of the ad, among others. Further, the request ad message **320** could be supplemented by communications between ad application **112** and advertising client **120** as shown by arrow **322.**

Based on the request ad message **320** and any supplemental ad messages **322,** advertising client **120** takes control over the UI or a portion thereof as shown by arrow **330** to provide the ad to the UI **160.** Further, interactions with the UI or a portion thereof by a user are provided back to advertising client **120** as shown by arrow **340.**

While the ad is being displayed and user interactions are being recorded, ad application **112** can still maintain control over a portion of UI **160** in some embodiments. This is shown by output **350** and input **352.**

In one embodiment, ad application **112** has the option of stopping the display of the advertisement by requesting this from advertising client **120.** This is shown by the stop advertisement message **360.**

As will be appreciated by those skilled in the art, the above references a user interface on a mobile device for an advertising client **120.** However, the same is equally applicable to a wired environment. For example, a user interface on a desktop or laptop computer connected by an Ethernet cable to the Internet could be controlled in the same way. In other words, a trusted ad application **112** is added to the desktop or laptop computer and, thereafter, untrusted advertising applications could utilize the trusted advertising client **120** to provide ads on the UI **160.** With a wired connection the advertising client **120** may prefer to get advertisements in real time from an advertising server **140** (shown in **Figure 1**).
In other embodiments; advertising client **120** could use storage on the desktop or laptop computer.

In a further embodiment, it may be possible to remotely control user interface **160.** In this case, advertising client **120** does not need to be located on the device since the UI is being controlled and could be located remotely at another location within the network. Alternatively, portions of the advertising client **120** could be located on the device and other portions of it could be located at other locations in the network. Thus, the advertising client **120** could be divided with logical functions at various locations within a network.

In a wireless environment, the above could be implemented on any mobile device. One exemplary mobile device is illustrated with reference to **Figure 4****.**

Mobile device **400** is preferably a two-way wireless communication device having at least voice and data communication capabilities. Mobile device **400** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **400** is enabled for two-way communication, it will incorporate a communication subsystem **411,** including both a receiver **412** and a transmitter **414,** as well as associated components such as one or more, preferably embedded or internal, antenna elements **416** and **418,** local oscillators (LOs) **413,** and a processing module such as a digital signal processor (DSP) **420.** As will be apparent to those skilled in the field of communications, the particular design of the communication subsystem **411** will be dependent upon the communication network in which the device is intended to operate.

Network access requirements will also vary depending upon the type of network **419.** In some CDMA networks network access is associated with a subscriber or user of mobile device **400.** A CDMA mobile device may require a removable user identity module (RUIM) or a subscriber identity module (SIM) card in order to operate on a CDMA network. The SIM/RUIM interface **444** is normally similar to a card-slot into which a SIM/RUIM card can be inserted and ejected like a diskette or PCMCIA card. The SIM/RUIM card can have approximately 64K of memory and hold many key configuration **451,** and other information **453** such as identification, and subscriber related information.

When required network registration or activation procedures have been completed, mobile device **400** may send and receive communication signals over the network **419.** As illustrated in **Figure 4****,** network **419** can consist of multiple base stations communicating with the mobile device. For example, in a hybrid CDMA 1x EVDO system, a CDMA base station and an EVDO base station communicate with the mobile station and the mobile device is connected to both simultaneously. The EVDO and CDMA 1x base stations use different paging slots to communicate with the mobile device.

Signals received by antenna **416** through communication network **419** are input to receiver **412,** which may perform such common receiver functions as signal amplification, frequency down conversion, filtering, channel selection and the like, and in the example system shown in **Figure 4****,** analog to digital (A/D) conversion. A/D conversion of a received signal allows more complex communication functions such as demodulation and decoding to be performed in the DSP **420.** In a similar manner, signals to be transmitted are processed, including modulation and encoding for example, by DSP **420** and input to transmitter **414** for digital to analog conversion, frequency up conversion, filtering, amplification and transmission over the communication network **419** via antenna **418.** DSP **420** not only processes communication signals, but also provides for receiver and transmitter control. For example, the gains applied to communication signals in receiver **412** and transmitter **414** may be adaptively controlled through automatic gain control algorithms implemented in DSP **420.**

Mobile device **400** preferably includes a microprocessor **438** which controls the overall operation of the device. Communication functions, including at least data and voice communications, are performed through communication subsystem **411.** Microprocessor **438** also interacts with further device subsystems such as the display **422,** flash memory **424,** random access memory (RAM) **426,** auxiliary input/output (I/O) subsystems **428,** serial port **430,** one or more keyboards or keypads **432,** speaker **434,** microphone **436,** other communication subsystem **440** such as a short-range communications subsystem and any other device subsystems generally designated as **442.** Serial port **430** could include a USB port or other port known to those in the art.

Some of the subsystems shown in **Figure 4** perform communication-related functions, whereas other subsystems may provide "resident" or on-device functions. Notably, some subsystems, such as keyboard **432** and display **422,** for example, may be used for both communication-related functions, such as entering a text message for transmission over a communication network, and device-resident functions such as a calculator or task list.

Operating system software used by the microprocessor **438** is preferably stored in a persistent store such as flash memory **424,** which may instead be a read-only memory (ROM) or similar storage element (not shown). Those skilled in the art will appreciate that the operating system, specific device applications, or parts thereof, may be temporarily loaded into a volatile memory such as RAM **426.** Received communication signals may also be stored in RAM **426.**

As shown, flash memory **424** can be segregated into different areas for both computer programs **458** and program data storage **450, 452, 454** and **456.** These different storage types indicate that each program can allocate a portion of flash memory **424** for their own data storage requirements. Microprocessor **438,** in addition to its operating system functions, preferably enables execution of software applications on the mobile device. A predetermined set of applications that control basic operations, including at least data and voice communication applications for example, will normally be installed on mobile device **400** during manufacturing. Other applications could be installed subsequently or dynamically.

A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **419.** In a preferred embodiment, the PIM data items are seamlessly integrated, synchronized and updated, via the wireless network **419,** with the mobile device user's corresponding data items stored or associated with a host computer system. Further applications may also be loaded onto the mobile device **400** through the network **419,** an auxiliary I/O subsystem **428,** serial port **430,** short-range communications subsystem **440** or any other suitable subsystem **442,** and installed by a user in the RAM **426** or preferably a non-volatile store (not shown) for execution by the microprocessor **438.** Such flexibility in application installation increases the functionality of the device and may provide enhanced on-device functions, communication-related functions, or both. For example, secure communication applications may enable electronic commerce functions and other such financial transactions to be performed using the mobile device **400.**

In a data communication mode, a received signal such as a text message or web page download will be processed by the communication subsystem **411** and input to the microprocessor **438,** which preferably further processes the received signal for output to the display **422,** or alternatively to an auxiliary I/O device **428.**

A user of mobile device **400** may also compose data items such as email messages for example, using the keyboard **432,** which is preferably a complete alphanumeric keyboard or telephone-type keypad, in conjunction with the display **422** and possibly an auxiliary I/O device **428.** Such composed items may then be transmitted over a communication network through the communication subsystem **411.**

For voice communications, overall operation of mobile device **400** is similar, except that received signals would preferably be output to a speaker **434** and signals for transmission would be generated by a microphone **436.** Alternative voice or audio I/O subsystems, such as a voice message recording subsystem, may also be implemented on mobile device **400.** Although voice or audio signal output is preferably accomplished primarily through the speaker **434,** display **422** may also be used to provide an indication of the identity of a calling party, the duration of a voice call, or other voice call related information for example.

Serial port **430** in **Figure 4****,** would normally be implemented in a personal digital assistant (PDA)-type mobile device for which synchronization with a user's desktop computer (not shown) may be desirable, but is an optional device component. Such a port **430** would enable a user to set preferences through an external device or software application and would extend the capabilities of mobile device **400** by providing for information or software downloads to mobile device **400** other than through a wireless communication network. The alternate download path may for example be used to load an encryption key onto the device through a direct and thus reliable and trusted connection to thereby enable secure device communication. As will be appreciated by those skilled in the art, serial port **430** can further be used to connect the mobile device to a computer to act as a modem.

Other communications subsystems **440,** such as a short-range communications subsystem, is a further optional component which may provide for communication between mobile device **400** and different systems or devices, which need not necessarily be similar devices. For example, the subsystem **440** may include an infrared device and associated circuits and components or a Bluetooth™ communication module to provide for communication with similarly enabled systems and devices.

In one embodiment, an advertising client **460** communicates with processor **438** to provide the functionality as disclosed herein.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method to avoid fake advertisement metrics from an untrusted application (112) having control over a user interface using a trusted advertising client (120) on a device (110), comprising:
receiving an indication at the trusted advertising client (120) from the untrusted application (112) that an advertisement is requested;
assuming control by the trusted advertising client of at least a portion of the user interface (160);
at the trusted advertising client (120), providing the advertisement in the portion of the user interface;
receiving and compiling metrics at the trusted advertising client (120); and
reporting the compiled metrics.

2. The method of claim 1, wherein the compiling is based on interaction through the user interface (160) with the advertisement.

3. The method of claim 2, wherein the interaction is selected from the group consisting of: click to contact; click to ask to be contacted; click to locate; click to enter branded Mobile Web site; click to receive coupon; click-to-buy; click to download content; click to forward content advertisements; forwarding ad; sending notification; click to request; click-to-discard; and click to save or bookmark.

4. The method of any one of claims 1 to 3, wherein assuming control is over the entire user interface (160).

5. The method of any one of claims 1 to 4, wherein the receiving the indication includes information about a desired advertisement.

6. The method of claim 5, wherein the information about the desired advertisement includes at least one factor selected from the group consisting of:
a size of the desired advertisement, a screen location for the desired advertisement; an insertion point for the desired advertisement; a shape for the desired advertisement; a texture for the desired advertisement; a duration for the desired advertisement; and a three dimensional plane for the desired advertisement.

7. The method of any one of claims 1 to 6, wherein the advertisement is retrieved from a memory location (130).

8. The method of any one of claims 1 to 7, wherein the advertisement is requested from an advertisement server (140).

9. The method of any one of claims 1 to 8, wherein the method is performed by an advertising client (110) on a device.

10. The method of any one of claims 1 to 9, further comprising checking whether the application is untrusted.

11. The method of claim 10, where responsive to the checking the method further comprises either providing an advertisement directly to a trusted application (114) or accessing an advertisement directly by a trusted application (114).

12. A device adapted to avoid fake advertisement metrics comprising:
a processor;
a communications subsystem;
a user interface (160);
at least one untrusted application (112) running on said processor, said at least one untrusted application (112) adapted to interact with said user interface (160); and
a trusted advertising client (120), said trusted advertising client (120) adapted to perform the steps of the method of any preceding claim.

13. The device of claim 12, wherein the device is a mobile device (110).

14. The device of claim 12 or 13 , wherein the user interface (160) includes an output component selected from the group consisting of a visual display, an audio output, and a tactile output.

15. The device of claim 12, 13 or 14, wherein the user interface (160) includes an input component selected from the group consisting of a keyboard, a mouse, a scroll wheel, a stylus, a touch screen, and a microphone.

## Patentansprüche

1. Verfahren zum Vermeiden von gefälschten Werbungs- bzw. Anzeigen-Metriken von einer nicht vertrauenswürdigen Anwendung (112), die eine Steuerung über eine Benutzerschnittstelle hat, unter Verwendung eines vertrauenswürdigen Werbungs-Clients (120) auf einer Vorrichtung (110), das aufweist:
Empfangen einer Anzeige an dem vertrauenswürdigen Werbungs-Client (120) von der nicht vertrauenswürdigen Anwendung (112), dass eine Werbung angefordert wird;
Übernehmen der Steuerung durch den vertrauenswürdigen Werbungs-Client über zumindest einen Teil der Benutzerschnittstelle (160);
an dem vertrauenswürdigen Werbungs-Client (120), Vorsehen der Werbung in dem Teil der Benutzerschnittstelle;
Empfangen und Kompilieren von Metriken an dem vertrauenswürdigen Werbungs-Client (120); und
Berichten der kompilierten Metriken.

2. Verfahren gemäß Anspruch 1, wobei das Kompilieren basiert auf einer Interaktion über die Benutzerschnittstelle (160) mit der Werbung.

3. Verfahren gemäß Anspruch 2, wobei die Interaktion aus der Gruppe ausgewählt ist, die besteht aus: Klicken zum Kontaktieren; Klicken zum Anfordern eines Kontaktierens; Klicken zum Lokalisieren; Klicken zum Betreten einer markengeschützten Mobil-Website; Klicken zum Empfangen eines Coupons; Klicken zum Kaufen (Click-to-Buy); Klicken zum Herunterladen von Inhalt; Klicken zum Weiterleiten von Inhalt-Werbung; Weiterleiten von Anzeige; Senden einer Benachrichtigung; Klicken zum Anfordern; Klicken zum Verwerfen; und Klicken zum Speichern oder Bookmarken.

4. Verfahren gemäß einem der Ansprüche 1 bis 3, wobei ein Übernehmen der Steuerung über die gesamte Benutzerschnittstelle (160) ist.

5. Verfahren gemäß einem der Ansprüche 1 bis 4, wobei das Empfangen der Anzeige eine Information über eine gewünschte Werbung umfasst.

6. Verfahren gemäß Anspruch 5, wobei die Information über die gewünschte Werbung zumindest einen Faktor umfasst, der aus der Gruppe ausgewählt ist, die besteht aus: eine Größe der gewünschten Werbung, eine Bildschirmposition für die gewünschte Werbung; ein Einfügepunkt für die gewünschte Werbung; eine Form für die gewünschte Werbung; eine Textur für die gewünschte Werbung; eine Dauer für die gewünschte Werbung; und eine dreidimensionale Ebene für die gewünschte Werbung.

7. Verfahren gemäß einem der Ansprüche 1 bis 6, wobei die Werbung aus einer Speicherstelle (130) abgerufen wird.

8. Verfahren gemäß einem der Ansprüche 1 bis 7, wobei die Werbung von einem Werbungs-Server (140) angefordert wird.

9. Verfahren gemäß einem der Ansprüche 1 bis 8, wobei das Verfahren durch einen Werbungs-Client (110) auf einer Vorrichtung durchgeführt wird.

10. Verfahren gemäß einem der Ansprüche 1 bis 9, das weiter aufweist ein Überprüfen, ob die Anwendung nicht vertrauenswürdig ist.

11. Verfahren gemäß Anspruch 10, wobei in Reaktion auf das Überprüfen das Verfahren weiter aufweist entweder ein Liefern einer Werbung direkt an eine vertrauenswürdige Anwendung (114) oder ein Zugreifen auf eine Werbung direkt durch eine vertrauenswürdige Anwendung (114).

12. Vorrichtung, die zum Vermeiden von gefälschten Werbungs-Metriken ausgebildet ist, die aufweist:
einen Prozessor;
ein Kommunikationsteilsystem;
eine Benutzerschnittstelle (160);
zumindest eine nicht vertrauenswürdige Anwendung (112), die auf dem Prozessor läuft, wobei die zumindest eine nicht vertrauenswürdige Anwendung (112) ausgebildet ist, mit der Benutzerschnittstelle (160) zu interagieren; und
einen vertrauenswürdigen Werbungs-Client (120), wobei der vertrauenswürdige Werbungs-Client (120) ausgebildet ist zum Durchführen der Schritte des Verfahrens gemäß einem vorhergehenden Anspruch.

13. Vorrichtung gemäß Anspruch 12, wobei die Vorrichtung eine mobile Vorrichtung (110) ist.

14. Vorrichtung gemäß Anspruch 12 oder 13, wobei die Benutzerschnittstelle (160) eine Ausgabekomponente umfasst, die aus der Gruppe ausgewählt ist, die aus einer visuellen Anzeige, einer Audioausgabe und einer taktilen Ausgabe besteht.

15. Vorrichtung gemäß Anspruch 12, 13 oder 14, wobei die Benutzerschnittstelle (160) eine Eingabekomponente umfasst, die aus der Gruppe ausgewählt ist, die aus einer Tastatur, einer Maus, einem Scroll-Rad, einem Stylus, einem Berührungsbildschirm und einem Mikrofon besteht.

## Revendications

1. Procédé pour éviter une métrique d'annonce publicitaire erronée provenant d'une application non sécurisée (112) en prenant le contrôle d'une interface utilisateur en utilisant un client publicitaire sécurisé (120) sur un dispositif (110), comprenant :
la réception d'une indication par le client d'annonce publicitaire sécurisé (120) en provenance de l'application non sécurisée (112), du fait qu'une annonce publicitaire est demandée ;
la prise de contrôle, par le client d'annonce publicitaire sécurisé, d'au moins une partie de l'interface utilisateur (160) ;
sur le client d'annonce publicitaire sécurisé (120), la fourniture de l'annonce publicitaire dans la partie de l'interface utilisateur ;
la réception et la compilation d'une métrique sur le client d'annonce publicitaire sécurisé (120) ; et
l'envoi de la métrique compilée.

2. Procédé selon la revendication 1, dans lequel la compilation est fondée sur une interaction, par l'intermédiaire de l'interface utilisateur (160), avec l'annonce publicitaire.

3. Procédé selon la revendication 2, dans lequel l'interaction est sélectionnée dans le groupe constitué : d'un clic de prise de contact ; d'un clic de demande de contact ; d'un clic de localisation ; d'un clic d'entrée dans un site Web mobile de marque ; d'un clic de réception d'un coupon ; d'un clic d'achat ; d'un clic de téléchargement de contenu ; d'un clic de réexpédition d'annonces publicitaires de contenu ; d'une réexpédition de publicité ; d'un envoi de notification ; d'un clic de demande ; d'un clic de rejet ; et d'un clic de sauvegarde ou de mise en signet.

4. Procédé selon l'une quelconque des revendications 1 à 3, dans lequel la prise de contrôle s'effectue sur la totalité de l'interface utilisateur (160) .

5. Procédé selon l'une quelconque des revendications 1 à 4, dans lequel la réception de l'indication contient des informations concernant une annonce publicitaire souhaitée.

6. Procédé selon la revendication 5, dans lequel les informations concernant l'annonce publicitaire souhaitée comprennent au moins un facteur sélectionné dans le groupe constitué : d'une taille de l'annonce publicitaire souhaitée, d'une position sur l'écran de l'annonce publicitaire souhaitée ; d'un point d'insertion de l'annonce publicitaire souhaitée ; d'une forme de l'annonce publicitaire souhaitée ; d'une texture de l'annonce publicitaire souhaitée ; d'une durée de l'annonce publicitaire souhaitée ; et d'un plan tridimensionnel de l'annonce publicitaire souhaitée.

7. Procédé selon l'une quelconque des revendications 1 à 6, dans lequel l'annonce publicitaire est extraite d'un emplacement de mémoire (130).

8. Procédé selon l'une quelconque des revendications 1 à 7, dans lequel l'annonce publicitaire est demandée à un serveur d'annonces publicitaires (140).

9. Procédé selon l'une quelconque des revendications 1 à 8, le procédé étant mis en oeuvre par un client d'annonce publicitaire (110) sur un dispositif.

10. Procédé selon l'une quelconque des revendications 1 à 9, consistant en outre à vérifier si l'application est non sécurisée.

11. Procédé selon la revendication 10, le procédé consistant en outre, en réponse à la vérification, soit à fournir directement une annonce publicitaire à une application sécurisée (114), soit à accéder directement à une annonce publicitaire à partir d'une application sécurisée (114).

12. Dispositif apte à éviter une métrique d'annonce publicitaire erronée, comprenant :
un processeur ;
un sous-système de communication ;
une interface utilisateur (160) ;
au moins une application non sécurisée (112) s'exécutant sur ledit processeur, ladite au moins une application non sécurisée (112) étant apte à interagir avec ladite interface utilisateur (160) ; et
un client d'annonce publicitaire sécurisé (120), ledit client d'annonce publicitaire sécurisé (120) étant apte à mettre en ouvre les étapes du procédé selon l'une quelconque des revendications précédentes.

13. Dispositif selon la revendication 12, le dispositif étant un dispositif mobile (110).

14. Dispositif selon la revendication 12 ou 13, dans lequel l'interface utilisateur (160) comprend un composant de sortie sélectionné dans le groupe constitué d'un dispositif d'affichage visuel, d'une sortie audio et d'une sortie tactile.

15. Dispositif selon la revendication 12, 13 ou 14, dans lequel l'interface utilisateur (160) comprend un composant d'entrée sélectionné dans le groupe constitué d'un clavier, d'une souris, d'une molette de défilement, d'un stylet, d'un écran tactile et d'un microphone.
